# FASCICULE DE BREVET EUROPEEN

(11) **EP 2 208 205 B1**
(45) Date de publication et mention de la délivrance du brevet: **17.08.2011**
(21) Numéro de dépôt: 08847961.3
(22) Date de dépôt: 30.10.2008
(51) Int. Cl.: G21C 3/334, G21C 3/34

(54) **GRILLE DE MAINTIEN DE CRAYONS DE COMBUSTIBLE NUCLEAIRE, ET OSSATURE ET ASSEMBLAGE COMPRENANT UNE TELLE GRILLE**
ABSTANDSGITTER FÜR NUKLEARBRENNSTÄBE SOWIE GERÜST UND ANORDNUNG MIT EINEM SOLCHEN GITTER
NUCLEAR FUEL ROD SPACER GRID AND FRAMEWORK AND ASSEMBLY COMPRISING SUCH A GRID

(30) Priorité: 05.11.2007 FR 0758790
(43) Date de publication de la demande: 21.07.2010
(73) Titulaire: Areva NP, 92400 Courbevoie (FR)
(72) Inventeur: GOMEZ, Noémie, F-69100 Villeurbanne (FR); BEATI, Angelo, F-69003 Lyon (FR); HERTZ, Dominique, F-69110 Sainte Foy Les Lyon (FR); MULLER, Thierry, F-71390 St Helène (FR)
(74) Mandataire: Domenego, Bertrand
(86) Numéro de dépôt international: PCT/FR2008/051959
(87) Numéro de publication internationale: WO 2009/060152

(56) Documents cités:
- FR-A- 2 426 312
- FR-A- 2 639 139
- FR-A- 2 785 712
- US-A- 5 434 898

## Description

La présente invention concerne une grille de maintien de crayons de combustible nucléaire pour assemblage de combustible, du type comprenant au moins deux parties de grille maillées destinées à être superposées suivant une direction longitudinale, chaque partie de grille s'étendant dans un plan transversal, les parties de grille étant déplaçables l'une par rapport à l'autre suivant au moins une direction transversale entre une configuration ouverte d'insertion de crayons de combustible nucléaire suivant la direction longitudinale au travers des parties de grille, et une configuration fermée permettant le serrage transversal entre les parties de grille de chaque crayon inséré au travers des parties de grille.

FR 2 639 139 A1 décrit une grille de maintien de crayons de combustible nucléaire pour réacteur à eau légère, comprenant deux parties de grille à bossages et une partie de grille à ressorts pouvant être décalées pour l'insertion longitudinale des crayons au travers de la grille, ou alignées pour le serrage des crayons entre les parties de grille. La grille comprend un cadre externe réalisé en deux parties pour maintenir les parties de grille en configuration de serrage des crayons.

La mise en oeuvre de cette grille nécessite un outil spécial pour maintenir les parties de grille en configuration d'insertion des crayons et en configuration de serrage des crayons, et pour fixer le cadre.

Un but de l'invention est de proposer une grille de maintien de crayons de combustible nucléaire qui soit de mise en oeuvre aisée.

A cet effet, l'invention propose une grille de maintien de crayons de combustible nucléaire du type précité, caractérisée en ce qu'elle comprend des éléments d'immobilisation transversale des parties de grille en configuration fermée, agencés pour venir en prise par rapprochement suivant la direction longitudinale des parties de grilles superposées.

Selon d'autres modes de réalisation, la grille de maintien de crayons de combustible nucléaire comprend une ou plusieurs des caractéristiques suivantes, prise(s) isolément ou selon toutes les combinaisons techniquement possibles :
- les parties de grille possèdent des organes de verrouillage longitudinal des parties de grille en configuration fermée ;
- des organes de verrouillage sont fixés sur une partie de grille et apte à s'encliqueter sur l'autre partie de grille lors du rapprochement suivant la direction longitudinale des parties de grilles ;
- des éléments d'immobilisation comprennent des parois périphériques fixées sur une partie de grille et définissant entre elles et avec cette partie de grille, un espace de réception de l'autre partie de grille dans lequel l'autre partie de la grille est emboîtable ;
- les parties de grille possèdent en vue suivant la direction longitudinale un contour périphérique polygonal, les parois périphériques comprenant au moins une paire de parois périphériques fixées sur une partie de grille et s'étendant le long de côtés opposés de cette partie de grille ;
- au moins une paroi périphérique fixée sur une partie de grille, porte une dent de verrouillage des parties de grille en configuration fermée, apte à s'encliqueter sur l'autre partie de grille lors du rapprochement des parties de grille ;
- les parties de grille définissent au moins un passage pour un tube-guide de réception d'un crayon de grappe, au moins une des parties de grilles pouvant recevoir le ou chaque tube guide avec un jeu transversal suivant au moins une direction transversale de serrage des crayons entre les parties de grilles ;
- chaque partie de grille est formée de premières plaques et de deuxièmes plaques entrecroisées avec les premières plaques ;
- elle comprend une première paire de parties de grille prévues pour le serrage de crayons suivant une première direction transversale, et une deuxième paire de parties de grille pour le serrage de ces crayons suivant une deuxième direction transversale différente de la première direction transversale ;
- une partie de grille de la première paire de parties de grille est fixée sur une partie de grille de la deuxième paire de parties de grille.

L'invention concerne également une ossature de maintien de crayons de combustible nucléaire d'un assemblage de combustible nucléaire, comprenant une pluralité de grilles de maintien de crayons d'un faisceau de crayons, les grilles de maintien étant destinées à être réparties le long des crayons à distance les unes des autres, caractérisé en ce qu'au moins une des grilles de maintien est une grille de maintien telle que définie ci-dessus.

L'invention concerne encore un assemblage de combustible nucléaire comprenant un faisceau de crayons de combustible nucléaires et une ossature de maintien des crayons telle que définie ci-dessus.

L'invention et ses avantages seront mieux compris à la lecture de la description qui va suivre, donnée uniquement à titre d'exemple, et faite en se référant aux dessins annexés, sur lesquels :
- la Figure 1 est une vue latérale en élévation d'un assemblage de combustible nucléaire pour réacteur nucléaire à eau pressurisée ;
- les Figures 2 et 3 sont des vues en perspective d'une grille de maintien de crayons de combustible nucléaire conforme à l'invention, en configurations ouverte et fermée ;
- la Figure 4 est une vue en perspective éclatée d'une partie de grille de la grille des Figures 2 et 3 ;
- la Figure 5 est une vue en perspective, d'une autre partie de grille de la grille des Figures 2 et 3 ;
- les Figures 6 et 7 sont des vues partielles de dessus de la grille des Figures 2 et 3, en configurations ouverte et fermée ;
- la Figure 8 est une vue en perspective de la grille des Figures 2 et 3, en configuration fermée et de crayons de combustible nucléaire;
- les Figures 9 et 10 sont des vues en perspective de deux grilles de maintien de crayons de combustible nucléaire, en configurations ouverte et fermée des grilles ;
- les Figures 11 et 12 sont des vues en perspective d'une grille de maintien de crayons de combustible nucléaire selon une variante de réalisation, en configurations ouverte et fermée ;
- la Figure 13 est une vue en perspective d'une grille de maintien de crayons de combustible nucléaire selon une variante de réalisation en configuration ouverte ; et
- les Figures 14 à 18 sont des vues partielles de dessus de grilles de maintien de crayons de combustible nucléaire selon des variantes de réalisation.

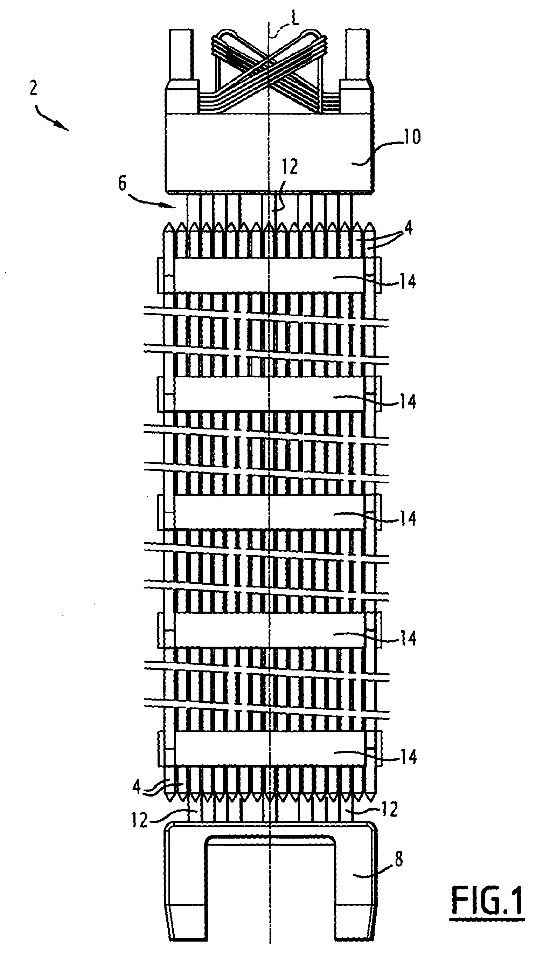

Afin d'illustrer le contexte de l'invention, la Figure 1 illustre schématiquement un assemblage 2 de combustible nucléaire pour réacteur à eau sous pression.

Dans ce type de réacteur, en fonctionnement, de l'eau légère sert de modérateur pour la réaction nucléaire, et de fluide caloporteur pour les échanges de chaleur.

L'assemblage 2 s'étend suivant une direction longitudinale L, destinée à être verticale lorsque l'assemblage 2 est disposé dans le coeur d'un réacteur nucléaire. Cette direction est la direction principale d'écoulement de l'eau.

De manière connue, l'assemblage 2 comprend un faisceau de crayons 4 de combustible nucléaire contenant la matière fissile, et une ossature 6 de support et de maintien des crayons 4.

L'ossature 6 comprend classiquement un embout inférieur 8, un embout supérieur 10, des tubes guides 12, et des grilles 14 de maintien des crayons 4.

L'embout inférieur 8 et l'embout supérieur 10 sont disposés aux extrémités longitudinales de l'assemblage 2.

Les tubes guides 12 s'étendent longitudinalement entre les embouts 8, 10, et sont fixés à leurs extrémités longitudinales aux embouts 8, 10. Ainsi, les tubes guides 12 relient les embouts 8 et 10 entre eux.

De manière classique, les tubes guides 12 sont destinés à recevoir par leurs extrémités supérieures ouvertes, des crayons de grappe ne contenant pas de matière fissile (non représentés) dont la présence ou l'insertion plus ou moins importante permet de piloter la réaction nucléaire.

Dans une variante de réalisation, au moins un des tubes-guides est remplacé par un tube d'instrumentation destiné à permettre l'insertion par son extrémité inférieure ouverte d'un dispositif d'instrumentation du réacteur.

Les grilles 14 sont fixées sur les tubes guides 12 et réparties le long des tubes guides 12, entre les embouts 8, 10. Les grilles 14 possèdent des structures analogues, et peuvent présenter des variantes suivant leur position longitudinale : présence ou non d'ailettes de mélange, d'ailette de guidages, de plaquettes extérieures...

Les crayons 4 sont disposés longitudinalement en un faisceau et traversent les grilles 14. Les grilles 14 assurent le maintien des crayons 4 sur l'ossature 6. Les crayons 4 se terminent à distance des embouts 8, 10.

Les grilles 14 maintiennent les crayons 4 et les tubes-guides 12 espacés pour permettre l'écoulement de l'eau pressurisée suivant la direction L, au travers l'assemblage, entre les crayons 4.

Une grille usuelle pour un assemblage de combustible pour réacteur à eau pressurisée définissant un réseau à base carrée comporte par exemple entre 14 et 19 cellules sur chacun de ses côtés, plusieurs cellules de réception de tubes-guides réparties dans le réseau, et, en option, une cellule centrale de réception d'un tube d'instrumentation.

Une grille usuelle pour un assemblage de combustible pour réacteur à eau bouillante définissant un réseau à base carrée comporte par exemple entre 6 et 13 cellules sur chacun de ses côtés et au moins une cellule de réception d'un canal d'eau qui remplace de 1 et jusqu'à 5x5 crayons de combustibles et disposée en générale de façon relativement centrale.

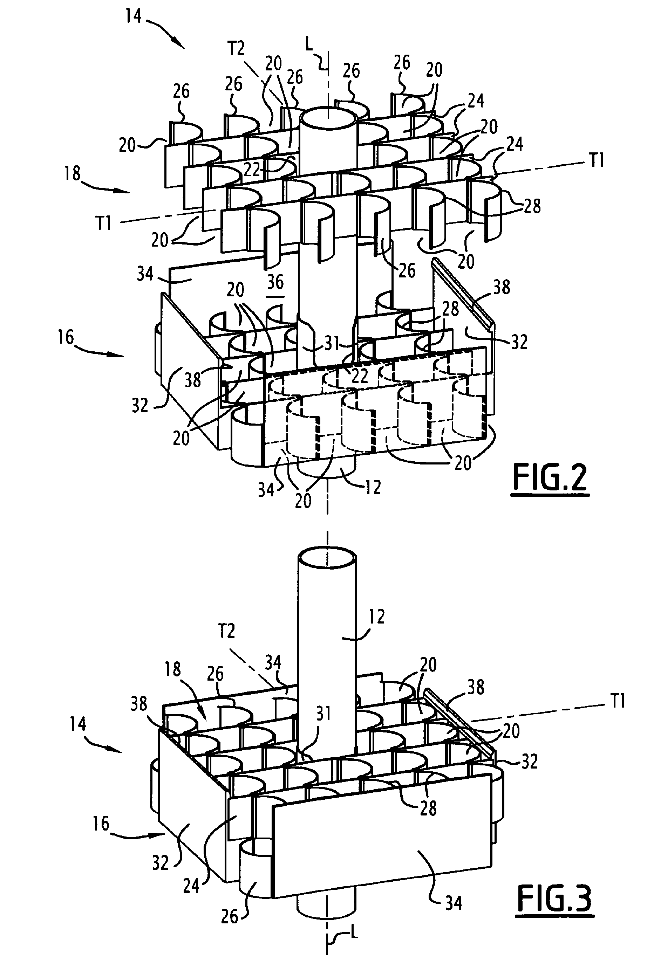

L'invention va maintenant être décrite par référence aux Figures 2 à 8, illustrant une grille 14 analogue à celles de la Figure 1, mais limitée, pour des raisons de clarté des dessins, à un réseau conçu pour recevoir un nombre inférieur de crayons par rapport à une grille usuelle.

Telle que représentée sur les Figures 2 et 3, la grille 14 comprend une première partie de grille 16 et une deuxième partie de grille 18 séparées.

Les parties de grilles 16, 18 sont déplaçables l'une par rapport à l'autre suivant la direction L, entre une configuration ouverte (Figure 2) d'insertion de crayons de combustible nucléaire au travers de la grille 14 suivant la direction L, et une configuration fermée (Figure 3) de serrage des crayons de combustible nucléaire entre les parties de grille 16, 18.

Telles que représentées sur la Figure 2, chacune des parties de grilles 16, 18 est du type maillée, et définit une réseau de cellules comprenant des cellules 20 de réception de crayons de combustible nucléaire (non représentés), et une cellule 22 de réception d'un tube guide 12.

Dans l'exemple illustré, chaque partie de grille 16, 18 définit un réseau à base carrée présentant cinq cellules sur chacun de ses côtés. La cellule 22 de réception d'un tube guide 12 est la cellule centrale, et les autres cellules 20 sont des cellules de réception de crayons de combustible nucléaire (non représentés).

En configuration ouverte, chaque cellule 20 est apte à être traversée par un crayon 4 sensiblement sans serrage du crayon 4.

En configuration ouverte (Figure 2), les parties de grilles 16 et 18 s'étendent transversalement à la direction L, et sont superposées suivant la direction L, de sorte que chaque cellule 20 d'une partie de grille est superposée avec une cellule 20 de l'autre partie de grille afin de permettre l'insertion d'un crayon de combustible nucléaire suivant la direction L au travers de chaque paire de cellules 20 superposées.

Chaque partie de grille 16, 18 comprend des premières plaques intérieures de maintien 24 entrecroisées avec des deuxièmes plaques intérieures d'appui 26 définissant entre elles le réseau de cellules.

Les plaques de maintien 24 sont sensiblement planes et s'étendent suivant une première direction transversale T1. Les plaques d'appui 26 sont de forme ondulée et s'étendent de manière générale suivant une deuxième direction transversale T2 perpendiculaire à la direction T1.

Dans l'exemple illustré, chacune des plaques d'appui 26 comprend une pluralité de portions d'appui 28 sensiblement hémicylindriques d'axe parallèle à la direction L.

Chaque portion d'appui 28 comprend une face d'appui qui définit en partie une paroi d'une cellule 20, et est destinée à venir en appui sur un crayon en vue de son serrage. Les faces d'appui des portions d'appui 28 sont ici leurs faces concaves.

Les faces d'appui des portions d'appui 28 d'une plaque d'appui 26 sont orientées du même côté de la plaque 26, et les faces d'appui des portions d'appui 28 des plaques d'appui 26 d'une même partie de grille 16, 18 sont orientées dans la même direction transversale.

Les plaques de maintien 24 croisent les plaques d'appui 26 entre leurs portions d'appui 28, et maintiennent l'écartement entre les plaques d'appui 26.

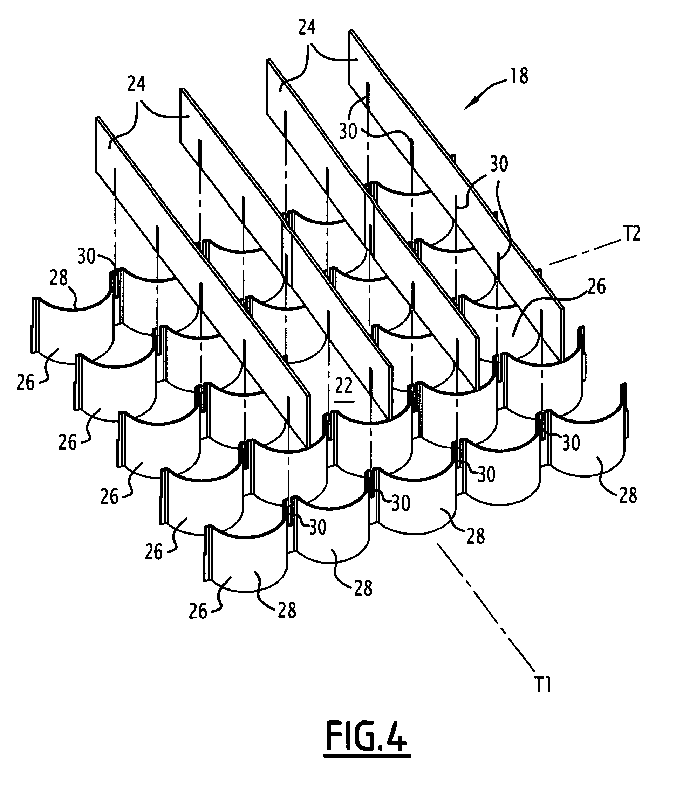

Telles que représentées sur la Figure 4, qui est une vue en perspective éclatée de la deuxième partie de grille 18, les plaques d'appui 26 et les plaques de maintien 24 sont munie d'encoches 30 complémentaires permettant leur emboîtement.

La cellule 22 de la deuxième partie de grille 18 est plus grande que le tube guide 12, en particulier suivant la direction T1, de sorte que la deuxième partie de grille 18 peut être enfilée sur le tube guide 12 avec un jeu transversal.

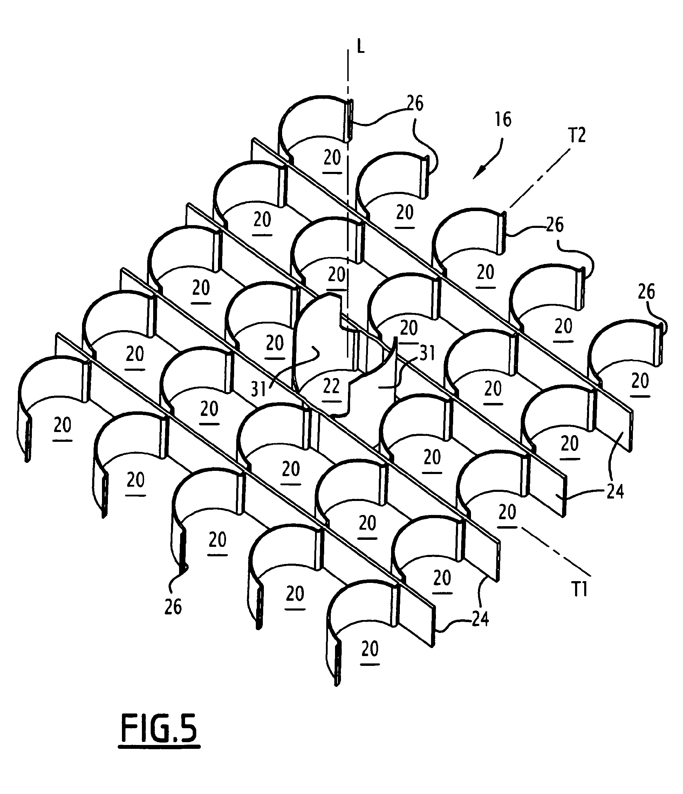

Telle que représentée sur la figure 5, la première partie de grille 16 comprend deux languettes 31 sur deux des premières plaques 24 délimitant la cellule 22. Les languettes 31 présentent la forme de portions de cylindre d'axe parallèle à la direction L.

Les languettes 31 sont venues de matière avec les plaques 24. En variante, les languettes 31 sont rapportées et fixées sur les plaques 24.

Les languettes 31 sont destinées à recevoir le tube guide 12 entre elles sensiblement sans jeu transversal, de sorte que la première partie de grille 16 soit immobile transversalement par rapport au tube guide 12.

Telle que représentée sur la Figure 2, la grille 14 comprend des moyens d'immobilisation transversale des parties de grille 16, 18 l'une par rapport à l'autre en configuration fermée des parties de grille 16, 18.

Ces moyens d'immobilisation transversale comprennent dans l'exemple illustré des plaques périphériques 32, 34 entourant les plaques intérieures 24, 26 de la première partie de grille 16 et fixées sur celles-ci. Les plaques périphériques 32, 34 sont fixées aux extrémités des plaques intérieures 24, 26. Chaque plaque périphérique 32, 34 s'étend sur un côté de la première partie de grille 16.

Les plaques périphériques 32, 34 se terminent à distance les unes des autres, et ne sont pas directement reliées entre elles au niveau des coins de la première partie de grille 16. Les cellules 20 périphériques de la première partie de grille 16 sont fermées latéralement par les plaques périphériques 32, 34, à l'exception de deux cellules 20 de coin, ouvertes latéralement (à droite sur la Figure 2).

En variante, les plaques périphériques 32, 34 se rejoignent et sont liées entre elles, par exemple par soudage, les quatre cellules de coin sont fermées. Il en résulte que les crayons reçus dans ces cellules de coin seront protégés lors des opérations de manutention.

Les plaques périphériques 32, 34 s'étendent en saillie des plaques intérieures 24, 26 de la première partie de grille 16, en direction de la deuxième partie de grille 18 disposée en configuration ouverte. Elles définissent entre elles et avec les bords supérieurs des plaques intérieures 24, 26 de la première partie de grille 16, un espace 36 de réception de la deuxième partie de grille 18. L'espace 36 est complémentaire du contour extérieur de la deuxième partie de grille 18.

En configuration fermée (Figure 3), la deuxième partie de grille 18 est insérée suivant la direction L dans l'espace 36, et est immobilisée transversalement par les plaques périphériques 32, 34 par rapport à la première partie de grille 16.

Dans l'exemple illustré, les plaques périphériques 32, 34 s'étendent sur toute la hauteur des plaques intérieures 24, 26 de la première partie de grille 16 et de la deuxième partie de grille 18.

La grille 14 comprend des moyens de verrouillage aptes à bloquer les parties de grille 16, 18 longitudinalement l'une par rapport à l'autre, et actifs en configuration fermée de la grille 14.

Les moyens de verrouillage comprennent dans l'exemple illustré des dents de verrouillage 38 prévues pour s'encliqueter sur les bords supérieurs de plaques intérieures 24, 26 de la deuxième partie de grille 18 en configuration fermée (Figure 3).

Les dents 38 sont disposées sur les bords supérieurs d'une paire de parois périphériques 32 s'étendant le long de côtés opposés de la première partie de grille 16. Les plaques périphériques 32 font saillie sur une hauteur (suivant la direction L) légèrement supérieure à la hauteur des plaques 24, 26 de la deuxième partie de grille 18.

La deuxième partie de grille 18 est dépourvue de parois périphériques. Ainsi, les cellules 20 périphériques de la deuxième partie de grille 18 sont ouvertes latéralement en configuration ouverte (Figure 2). Elles sont en partie refermées par les parois périphériques 32, 34 de la première partie de grille 16 en configuration fermée (Figure 3). Dans une variante où les plaque périphériques 32, 34 se rejoignent aux quatre coins de la première partie de grille 16, les cellules 20 périphérique de la deuxième partie de grille 18 sont toutes fermées latéralement.

En option, de manière connue en soi, les plaques périphériques 32, 34 comportent des ailettes de guidage en saillie sur leur bord inférieur et/ou sur leur bord supérieur, et inclinées vers le centre de la grille, pour assurer un guidage de la grille avec les objets environnants lors des opérations de manutention.

L'insertion de crayons de combustible à travers la grille 14 est décrite par la suite en référence aux Figures 2, 3 et 6 à 8.

En vue de la réunion des deux parties de grille 16, 18, et de l'insertion des crayons 4, la première partie de grille 16 et la deuxième partie de grille 18 sont enfilées sur le tube guide 12 et disposées en configuration ouverte (Figure 2).

Les parties de grille 16 et 18 sont orientées autour de la direction L de façon que pour chaque paire de cellules 20 superposées suivant la direction L des parties de grille, et que les faces d'appui des portions d'appui 28 délimitant les cellules de ladite paire de cellule soient en regard.

Les languettes 31 sont soudées au tube guide 12. Ainsi, la première partie de grille 16 est immobile longitudinalement et transversalement par rapport au tube-guide 12. La deuxième partie de grille 18 est coulissante longitudinalement et mobile transversalement au moins suivant la direction T1 par rapport au tube guide 12.

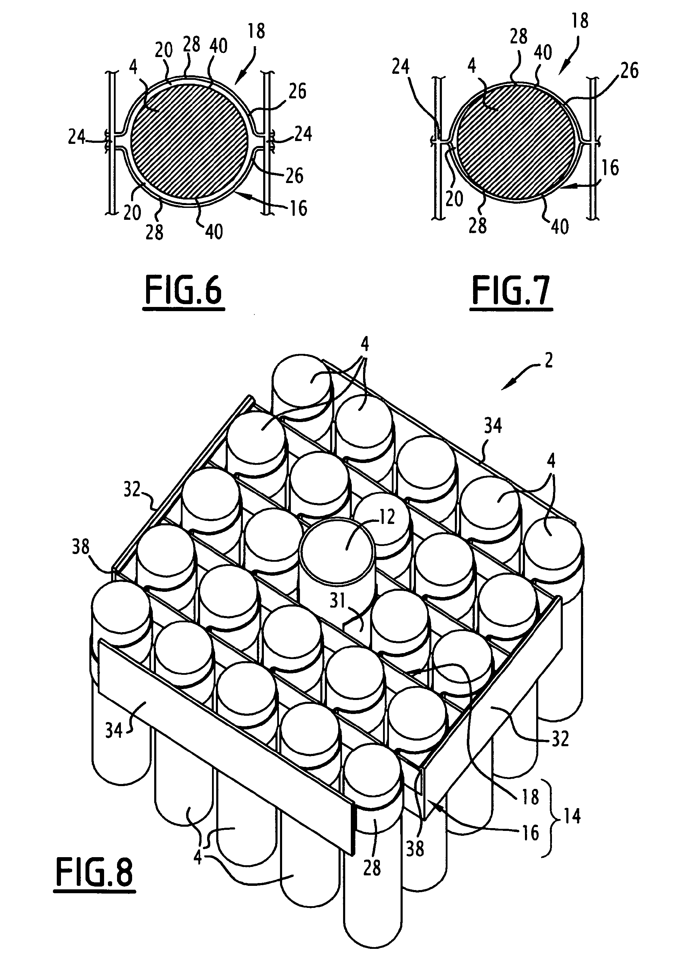

La deuxième partie de grille 18 est alors décalée transversalement suivant la direction T1, de façon que les faces d'appui des portions d'appui 28 des cellules 20 de chaque paire de cellules 20 superposées sont écartées suivant la direction T1 de façon à permettre l'insertion d'un crayon 4, sensiblement sans serrage entre les faces d'appui des portions d'appui 28 (Figure 6). Pour ce faire, l'écartement entre les faces d'appui est supérieur au diamètre des crayons 4. Chaque crayon 4 est inséré suivant la direction L à travers une paire de cellules 20 superposées.

Ensuite, les parties de grille 16 et 18 sont rapprochées suivant la direction L jusqu'à insérer la deuxième partie de grille 18 dans l'espace 36 correspondant de la première partie de grille 16 (Figure 8).

Lors de cette insertion, les parois périphériques 32, 34 guident la deuxième partie de grille 18 de sorte que les faces d'appui en regard des portions d'appui 28 des cellules 20 de chaque paire de cellules 20 superposées se rapprochent suivant la direction T1 et serrent entre elles le crayon 4 traversant ces deux cellules 20 (Figure 7).

Les parois périphériques 32 se déforment élastiquement en s'écartant l'une de l'autre lors de l'insertion pour permettre le glissement des dents 38 le long de la première partie de grille 18, jusqu'à ce que les dents 38 s'encliquettent sur la première partie de grille 18 et s'opposent à un mouvement inverse d'écartement des parties de grille 16 et 18.

Sur les Figures 6 et 7, on notera que les portions d'appui 28 présentent un rayon de courbure, du côté de leur face d'appui, supérieur au rayon de courbure de la surface extérieure 40 des crayons 4. Ceci assure un centrage du crayon 4 au moment du rapprochement des portions d'appui 28.

La Figure 8 illustre la grille 14 en configuration fermée, avec les crayons 4 traversant la grille 14.

Dans le mode de réalisation des Figures 2 à 8, chaque crayon 4 est serré suivant une direction transversale (la direction T1) entre une plaque d'appui 26 d'une des parties de grille 16, 18 et une plaque d'appui 26 de l'autre partie de grille.

L'insertion des crayons 4 dans la configuration ouverte des parties de grille 16, 18 sans serrage évite le frottement des crayons 4 contre les parties de grille 16, 18, et la formation de copeaux retirés à la surface extérieure des crayons 4, pouvant nuire à la résistance et à la longévité des crayons 4.

Lors du déplacement en configuration fermée, la deuxième partie de grille 18 se déplace longitudinalement le long des crayons 4 en les serrant progressivement. Néanmoins, ceci se fait sur une longueur réduite, ici sensiblement égale à la hauteur de la deuxième partie de grille 18.

L'installation de la grille 14 est aisée, puisque la réunion des parties de grille 16, 18 se fait simplement par rapprochement longitudinal, ce rapprochement provoquant le serrage des crayons 4 et la mise en prise des moyens d'immobilisation transversale des parties de grille 16, 18 en configuration fermée de serrage (parois périphériques 32, 34).

Le rapprochement des parties de grille 16, 18 provoque aussi la mise en prise des moyens de verrouillage des parties de grille 16 et 18 en configuration fermée de serrage (par exemple les dents 38). En variante ou en option, le verrouillage longitudinal des parties de grilles 16, 18 est obtenu en les fixant entre elles pour rendre la grille indémontable, par exemple par soudage en quelques points des plaques périphériques 32, 34 de la première partie de grille 16 avec une ou plusieurs plaques intérieures de la deuxième partie de grille 18.

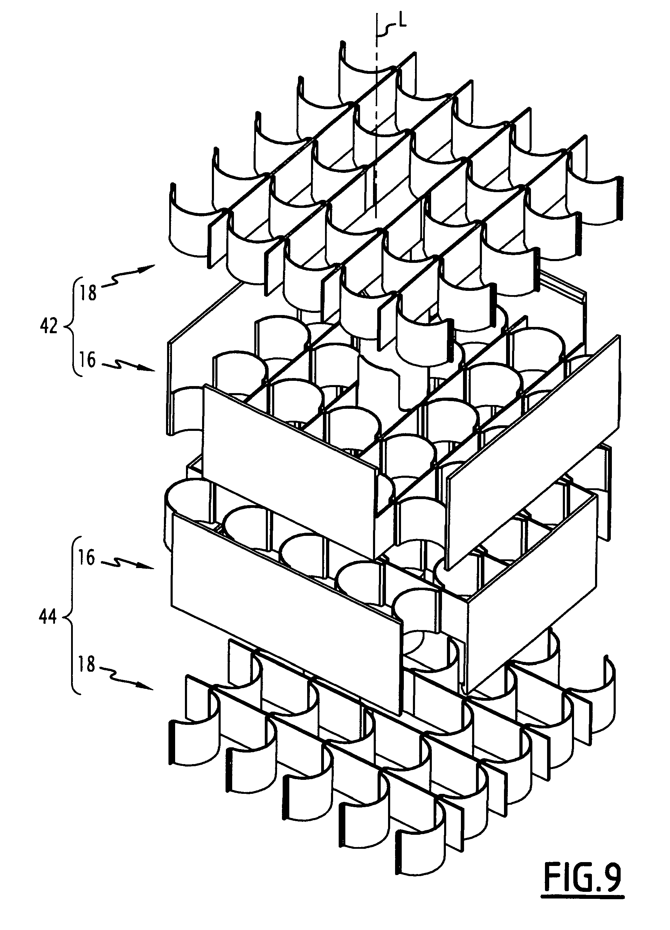

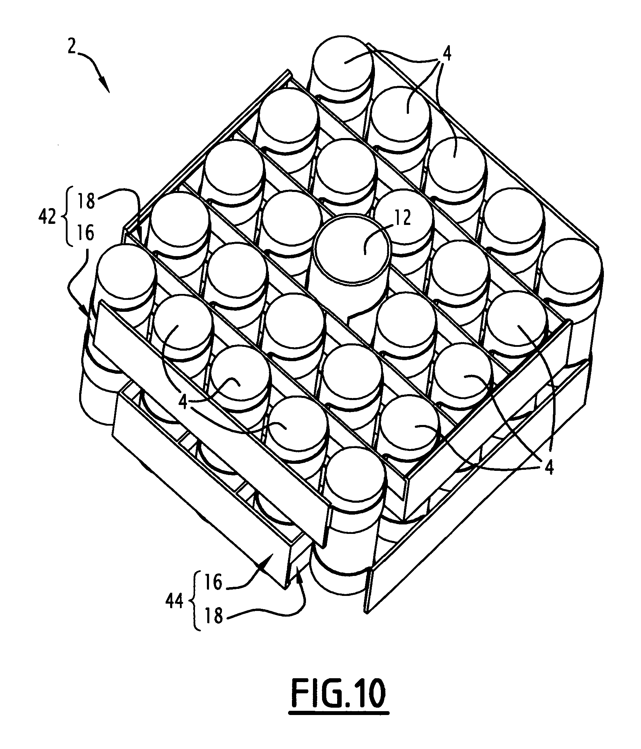

Telles que représentées sur les Figures 9 et 10, où les références aux éléments semblables à ceux des figures 1 à 8 ont été conservées, deux grilles 44, 42 identiques à la grille 14 des figures 2 à 8 sont superposées et décalées angulairement de 90° autour de la direction L de façon à s errer les crayons 4 suivant deux directions transversales différentes.

Telles que représentées sur la Figure 10, dans un assemblage, les grilles 42, 44 sont espacées suivant la direction L. En outre, la grille 44 est retournée, de façon que la deuxième partie de grille 18 de la grille 42 s'insère dans la première partie de grille 16 correspondante par le dessus, tandis que la deuxième partie de grille 18 de la grille 44 s'insère dans la première partie de grille 16 correspondante par le dessous. Ceci facilite le déplacement des deuxièmes parties de grille 18 en configuration de serrage lorsque l'écartement longitudinal des grilles 42, 44 est faible.

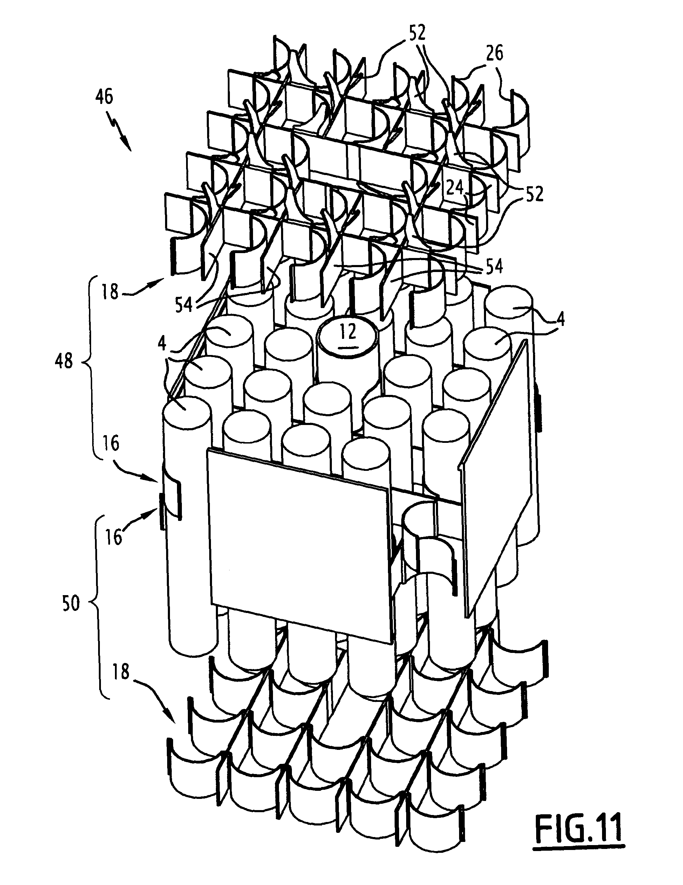

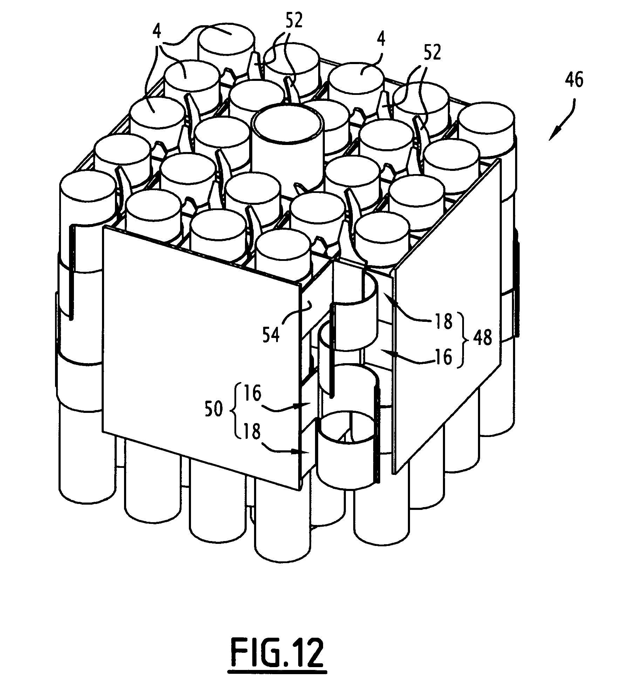

Telle que représentée sur les Figures 11 et 12, une grille 46 correspond à la réunion des grilles 42, 44 des figures 9 et 10.

Ainsi, on obtient une grille 46 possédant deux étages 48, 50, chacun formé par une première partie de grille 16 et une deuxième partie de grille 18 aptes à coopérer pour serrer chaque crayon suivant une direction transversale, les deux étages étant aptes à serrer les crayons suivant des directions transversales différentes (ici perpendiculaires).

En option, et comme illustré sur les Figures 11 et 12, la grille 46 possède des ailettes 52 de mélange d'un fluide caloporteur circulant entre les crayons 4, les ailettes 52 faisant saillie vers le haut à partir de la grille 46.

Plus précisément, les ailettes 52 sont fixées sur la deuxième partie de grille 18 de l'étage 48 supérieur, sur les bords supérieurs des plaques de maintien 24, et sur les bords supérieurs de plaques auxiliaires 54 de support d'ailettes sensiblement planes, et s'étendent perpendiculairement aux plaques de maintien 24.

La prévision d'ailettes de mélange n'est pas limitée aux grilles à deux étages. Des ailettes pourraient être prévues en option sur une grille à un seul étage telle que celle de la Figure 8.

La forme des portions d'appui 28 selon l'exemple des Figures 2 à 8 permet d'obtenir une surface d'appui importante tout en limitant la perte de charge de la grille 14, i.e. en limitant sa résistance à l'écoulement d'un fluide au travers de la grille 14.

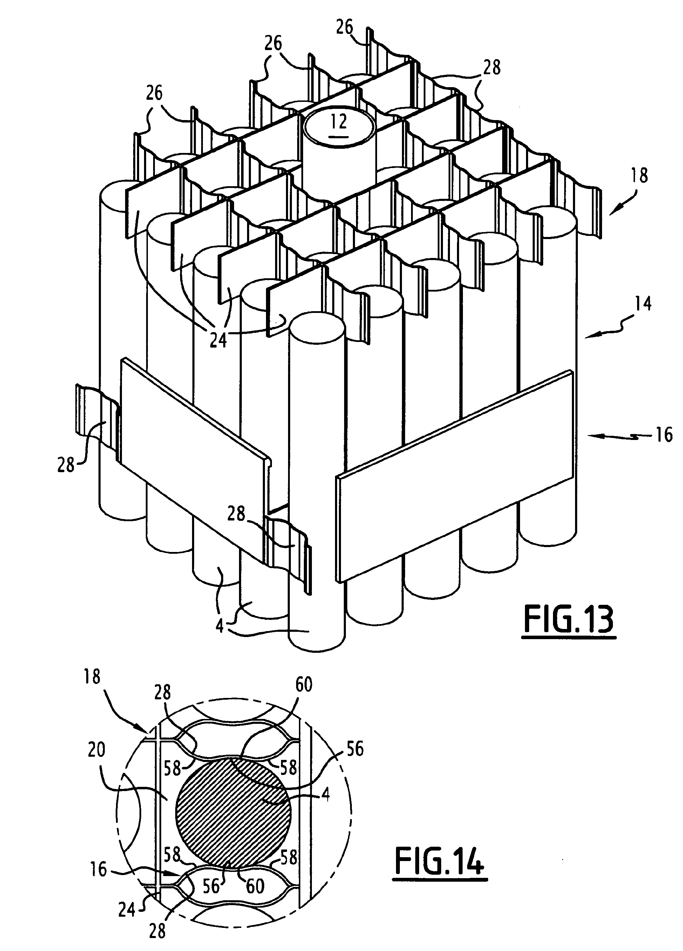

Cependant, la forme des portions d'appui 28 n'est pas limitée à l'exemple des figures 2 à 8. Les portions d'appui 28 peuvent présenter différentes formes. Les portions d'appui 28 de deux parties de grille d'une grille peuvent être différentes. Ceci est illustré sur les figures 13 à 18.

Telle que représentée sur la Figure 13, où les références aux éléments semblables à ceux des figures 2 à 8 ont été conservées, une grille 14 diffère de la grille des figures 2 à 8 par la forme des portions d'appui 28 des parties de grilles 16 et 18.

Comme cela est mieux visible sur la Figure 14, en vue suivant la direction L, chaque portion d'appui 28 présente une forme générale en W arrondi. La face d'appui comprend une zone d'appui concave 56, entourée par deux zones convexes 58.

Lorsqu'un crayon 4 est inséré dans des cellules 20 alignées des parties de grilles 16, 18, et que ces dernières sont en configuration fermée, la grille 14 est en appui sur le crayon 4 en deux zones 60 diamétralement opposées.

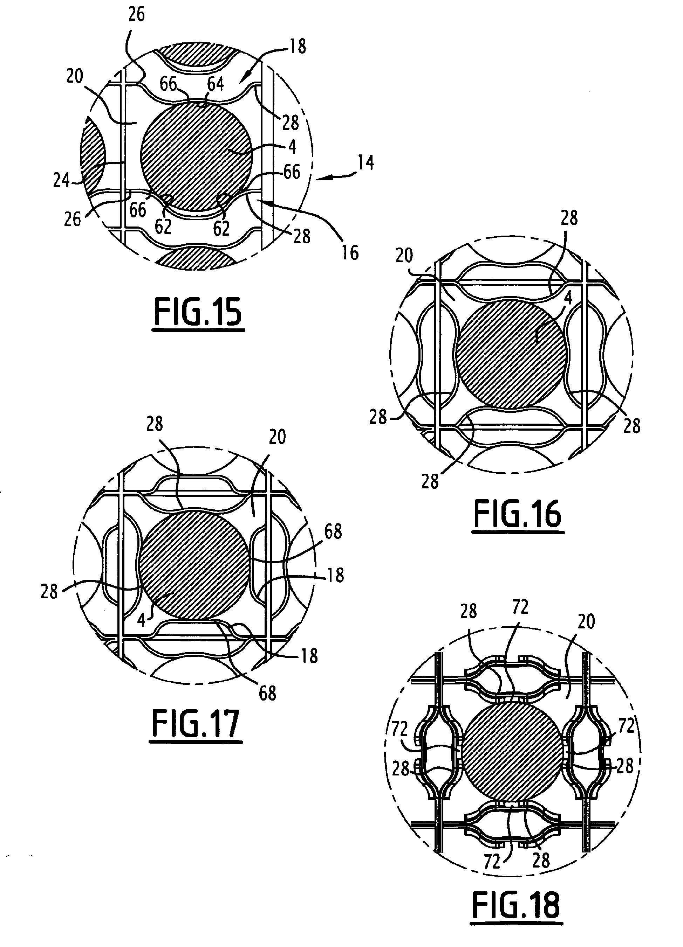

Dans une variante représentée sur la Figure 15, les portions d'appui 28 sont différentes. En vue suivant la direction L, chacune des portions d'appui 28 de la première partie de grille 16 possède sur sa face d'appui deux zones d'appui concaves 62 espacées, et chacune des portions d'appui 28 de la deuxième partie de grille 18 possède sur sa face d'appui une zone d'appui 64 concave.

Lorsqu'un crayon 4 est inséré dans des cellules 20 alignées des parties de grilles 16, 18, et que ces dernières sont en configuration fermée, la grille 14 est en appui sur le crayon 4 en trois zones 66 circonférentiellement espacées.

La Figure 16 illustre une grille à deux étages, analogue à celle des figures 11 et 12, dont les parties de grille 16, 18 possèdent des portions d'appui 28 identiques à celles de la figure 14.

La Figure 17 illustre une grille à deux étages, possédant deux deuxièmes parties de grille 18 munies de portions d'appui 28 identiques à celle de la figure 14, qui possède une certaine élasticité radialement au crayon 4 et formant des ressorts, et deux premières parties de grille 18 munie de portions d'appui possédant chacune une seule zone d'appui 68 plane, qui s'apparente à une bossette, plus rigides que les ressorts.

La Figure 18 illustre une grille à deux étages, dont les parties de grille possèdent des portions d'appui 28 possédant chacune sur sa face d'appui une zone d'appui concave 70 munie d'une fente 72 s'étendant suivant la direction L (perpendiculaire au plan de la Figure 18). La présence de la fente 72 permet d'adapter l'élasticité de la portion d'appui 28.

Les parties de grille sont réalisées en tout matériau approprié, et notamment en métal, tel que les alliages base zirconium, alliages base nickel ou autre

L'invention n'est pas limitée aux exemples décrits. En particulier, les parois ou les zones d'appui définissant des bossettes et des ressorts peuvent prendre toutes les formes appropriées.

En outre, les parties de grilles d'une grille sont verrouillées en configuration fermée par tout moyen approprié, tel que par des reliefs d'encliquetage (dents 38) ou par soudage.

L'invention s'applique aux grilles pour assemblage de combustible nucléaire pour réacteur nucléaire à eau légère, tels que les réacteurs à eau sous pression (PWR), et les réacteurs à eau bouillante (BWR). Dans ce dernier cas, chaque grille définit au moins un passage longitudinal pour un canal de circulation d'eau, par exemple en remplacement d'un tube-guide d'une grille pour assemblage du type PWR.

## Revendications

1. Grille de maintien de crayons de combustible nucléaire pour assemblage de combustible, du type comprenant au moins deux parties de grille (16, 18) maillées destinées à être superposées suivant une direction longitudinale (L), chaque partie de grille (16, 18) s'étendant dans un plan transversal, les parties de grille (16, 18) étant déplaçables l'une par rapport à l'autre suivant au moins une direction transversale entre une configuration ouverte d'insertion de crayons (4) de combustible nucléaire suivant la direction longitudinale (L) au travers des parties de grille (16, 18), et une configuration fermée permettant le serrage transversal entre les parties de grille (16, 18) de chaque crayon inséré au travers des parties de grille (16, 18),
**caractérisée en ce qu'**elle comprend des éléments (32, 34) d'immobilisation transversale des parties de grille (16, 18) en configuration fermée, agencés pour venir en prise par rapprochement suivant la direction longitudinale (L) des parties de grilles (16, 18) superposées.

2. Grille selon la revendication 1, **caractérisée en ce que** les parties de grille (16, 18) possèdent des organes (38) de verrouillage longitudinal des parties de grille (16, 18) en configuration fermée.

3. Grille selon la revendication 2, **caractérisée en ce que** des organes de verrouillage (38) sont fixés sur une partie de grille (16) et apte à s'encliqueter sur l'autre partie de grille lors du rapprochement suivant la direction longitudinale (L) des parties de grilles (16, 18).

4. Grille selon l'une quelconque des revendications précédentes, **caractérisée en ce que** des éléments d'immobilisation (32, 34) comprennent des parois périphériques (32, 34) fixées sur une partie de grille (16) et définissant entre elles et avec cette partie de grille (18), un espace (36) de réception de l'autre partie de grille (18) dans lequel l'autre partie de la grille (18) est emboîtable.

5. Grille selon la revendication 4, **caractérisée en ce que** les parties de grille (16, 18) possèdent en vue suivant la direction longitudinale (L) un contour périphérique polygonal, les parois périphériques (32, 34) comprenant au moins une paire de parois périphériques fixées sur une partie de grille (16) et s'étendant le long de côtés opposés de cette partie de grille (16).

6. Grille selon la revendication 4 ou 5, **caractérisé en ce qu'**au moins une paroi périphérique (32) fixée sur une partie de grille, porte une dent (38) de verrouillage des parties de grille (16, 18) en configuration fermée, apte à s'encliqueter sur l'autre partie de grille lors du rapprochement des parties de grille.

7. Grille selon l'une quelconque des revendications précédentes, **caractérisée en ce que** les parties de grille (16, 18) définissent au moins un passage pour un tube-guide (12) de réception d'un crayon de grappe, au moins une des parties de grilles (16, 18) pouvant recevoir le ou chaque tube guide (12) avec un jeu transversal suivant au moins une direction transversale (T1) de serrage des crayons (4) entre les parties de grilles (16, 18).

8. Grille selon l'une quelconque des revendications précédentes, **caractérisée en ce que** chaque partie de grille (16, 18) est formée de premières plaques (24) et de deuxièmes plaques (26) entrecroisées avec les premières plaques (24).

9. Grille selon l'une quelconque des revendications précédentes, **caractérisée en ce qu'**elle comprend une première paire de parties de grille (16, 18) prévues pour le serrage de crayons (4) suivant une première direction transversale (T1), et une deuxième paire de parties de grille (16, 18) pour le serrage de ces crayons (4) suivant une deuxième direction transversale (T2) différente de la première direction transversale (T1).

10. Grille selon la revendication 9, **caractérisée en ce qu'**une partie de grille (16) de la première paire de parties de grille (16, 18) est fixée sur une partie de grille (16) de la deuxième paire de parties de grille (16, 18).

11. Ossature de maintien de crayons de combustible nucléaire d'un assemblage de combustible nucléaire, comprenant une pluralité de grilles (14) de maintien de crayons d'un faisceau de crayons, les grilles (14) de maintien étant destinées à être réparties le long des crayons (4) à distance les unes des autres, **caractérisé en ce qu'**au moins une des grilles (14) de maintien est une grille de maintien selon l'une quelconque des revendications précédentes.

12. Assemblage de combustible nucléaire, comprenant un faisceau de crayons (6) de combustible nucléaires et une ossature (6) de maintien des crayons, **caractérisé en ce que** l'ossature est une ossature selon la revendication 11.

## Claims

1. A nuclear fuel rod spacer grid for a fuel assembly, of the type comprising at least two meshed grid parts (16, 18) intended to be superposed in a longitudinal direction (L), each grid part (16, 18) expending in a transverse plane, the grid parts (16, 18) being moveable one relative to the other in at least one transverse direction between an open configuration for the insertion of nuclear fuel rods (4) in the longitudinal direction (L) through the grid parts (16, 18), and a closed configuration allowing each fuel rod inserted through the grid parts (16, 18) to be clamped transversely between the grid parts (16, 18),
**characterized in that** it comprises elements (32, 34) for transversely immobilizing the grid parts (16, 18) in the closed configuration, these means being designed to engage as the superposed grid parts (16, 18) are moved closer together in the longitudinal direction (L).

2. The grid according to claim 1, **characterized in that** the grid parts (16, 18) have longitudinal locking members (38) for locking the grid parts (16, 18) in the closed configuration.

3. The grid according to claim 2, **characterised in that** the locking members (38) are fastened on a grid part (16) and able to fit onto the other part of the grid when the grid parts (16, 18) are brought closer in the longitudinal direction (L).

4. The grid according to any one of the preceding claims, **characterized in that** immobilizing elements (32, 34) comprise peripheral walls (32, 34) fastened on a grid part (16) and defining, between them and with this grid part (18), a space (36) for receiving the other grid part (18) in which the other grid part (18) can be interlocked.

5. The grid according to claim 4, **characterized in that** the grid parts (16, 18) have, viewed in the longitudinal direction (L), a polygonal peripheral contour, the peripheral walls (32, 34) comprising at least one pair of peripheral walls fastened on a grid part (16) and extending along opposite sides of this grid part (16).

6. The grid according to claim 4 or 5, **characterized in that** at least one peripheral wall (32) fastened on a grid part has a locking tooth (38) for locking grid parts (16, 18) in the closed configuration, able to fit onto the other part when the grid parts are brought closer together.

7. The grid according to any one of the preceding claims, **characterized in that** the grid parts (16, 18) define at least one passage for a guide-tube (12) for receiving a rod cluster, at least one of the grid parts (16, 18) being able to receive the or each guide tube (12) with transverse play in at least one transverse direction (T1) for gripping rods (4) between the grid parts (16, 18).

8. The grid according to any one of the preceding claims, **characterized in that** each grid part (16, 18) is formed by first plates (24) and second plates (26) intertwined with the first plates (24).

9. The grid according to any one of the preceding claims, **characterised in that** it comprises a first pair of grid parts (16, 18) provided to grip rods (4) in a first transverse direction (T1) and a second pair of grid parts (16, 18) for gripping these rods (4) in a second transverse direction (T2) different from the first transverse direction (T1).

10. The grid according to claim 9, **characterized in that** one grid part (16) of the first pair of grid parts (16, 18) is fastened on a grid part (16) of the second pair of grid parts (16, 18).

11. A framework for spacing nuclear fuel rods for a nuclear fuel assembly, comprising a plurality of spacer grids (14) for rods of a bundle of rods, the spacer grids (14) being intended to be distributed along rods (4) spaced apart from each other, **characterized in that** at least one of the spacer grids (14) is a spacer grid according to any one of the preceding claims,

12. A nuclear fuel assembly, comprising a bundle of nuclear fuel rods (6) and a spacer framework (6) for the rods, **characterized in that** the framework is a framework according to claim 11.

## Patentansprüche

1. Haltegitter für Kernbrennstäbe für Brennelement der Bauart, die mindestens zwei maschige Gitterabschnitte (16, 18) umfasst, die dazu bestimmt sind, gemäß einer Längsrichtung (L) übereinandergelegt zu werden, wobei sich jeder Gitterabschnitt (16, 18) in einer transversalen Ebene erstreckt, wobei die Gitterabschnitte (16, 18) zueinander gemäß mindestens einer transversalen Richtung zwischen einer geöffneten Konfiguration des Einsetzens von Kernbrennstäben (4) gemäß der Längsrichtung (L) durch Gitterabschnitte (16, 18) und einer geschlossenen Konfiguration, die die transversale Fixierung zwischen den Gitterabschnitten (16, 18) jedes durch Gitterabsehnitte (16, 18) eingesetzten Stabs erlaubt, verschiebbar sind,
**dadurch gekennzeichnet, dass** es transversale Fixierelemente (32, 34) der Gitterabschnitte (16, 18) in geschlossener Konfiguration umfasst, die ausgebildet sind, um durch Annäherung gemäß der Längsrichtung (L) der übereinandergelegten Gitterabschnitte (16, 18) in Eingriff zu kommen.

2. Gitter nach Anspruch 1, **dadurch gekennzeichnet, dass** die Gitterabschnitte (16, 18) Längsverriegelungsorgane (38) der Gitterabschnitte (16, 18) in geschlossener Konfiguration besitzen.

3. Gitter nach Anspruch 2, **dadurch gekennzeichnet, dass** Verriegelungsorgane (38) auf einem Gitterabschnitt (16) befestigt sind und imstande, bei der Annäherung gemäß der Längsrichtung (L) der Gitterabschnitte (16, 18) auf dem anderen Gitterabschnitt einzurasten.

4. Gitter nach einem der vorangehenden Abschnitte, **dadurch gekennzeichnet, dass** Fixierelemente (32, 34) periphere Wände (32, 34) umfassen, die auf einem Gitterabschnitt (16) befestigt sind und zwischen sich und mit diesem Gitterabschnitt (18) einen Aufnahmeraum (36) des anderen Gitterabschnitts (18) definieren, in den der andere Gitterabschnitt (18) einpassbar ist.

5. Gitter nach Anspruch 4, **dadurch gekennzeichnet, dass** die Gitterabschnitte (16, 18) in Sicht gemäß der Längsrichtung (L) eine polygonale periphere Kontur besitzen, wobei die peripheren Wände (32, 34) mindestens ein Paar peripherer Wände umfassen, die auf einem Gitterabschnitt (16) befestigt sind und sich entlang von Seiten erstrecken, die diesem Gitterabschnitt (16) gegenüberliegen.

6. Gitter nach Anspruch 4 oder 5, **dadurch gekennzeichnet, dass** mindestens eine auf einem Gitterabschnitt befestigte periphere Wand (32) einen Verriegelungszahn (38) der Gitterabschnitte (16, 18) in geschlossener Konfiguration trägt, der imstande ist, bei Annäherung der Gitterabschnitte auf dem anderen Gitterabschnitt einzurasten.

7. Gitter nach einem der vorangehenden Ansprüche, **dadurch gekennzeichnet, dass** die Gitterabschnitte (16, 18) mindestens einen Durchgang für ein Führungsrohr (12) zur Aufnahme eines Brennstabbündels definieren, wobei mindestens einer der Gitterabschnitte (16, 18) das oder jedes Führungsrohr (12) mit einem transversalen Spiel gemäß mindestens einer transversalen Fixierrichtung (T1) der Stäbe (4) zwischen den Gitterabschnitte (16, 18) aufnehmen kann.

8. Gitter nach einem der vorangehenden Ansprüche, **dadurch gekennzeichnet, dass** jeder Gitterabschnitt (16, 18) von ersten Platten (24) und von mit den ersten Platten (24) verkreuzten zweiten Platten (26) gebildet wird.

9. Gitter nach einem der vorangehenden Abschnitte, **dadurch gekennzeichnet, dass** es ein erstes Paar Gitterabschnitte (16, 18) umfasst, die für die Fixierung von Stäben (4) gemäß einer ersten transversalen Richtung (T1) vorgesehen sind und ein zweites Paar Gitterabschnitte (16, 18) für die Fixierung dieser Stäbe (4) gemäß einer zweiten transversalen Richtung (T2), die sich von der ersten transversalen Richtung (T1) unterscheidet.

10. Gitter nach Anspruch 9, **dadurch gekennzeichnet, dass** ein Gitterabschnitt (16) des ersten Paars Gitterabschnitte (16, 18) auf einem Gitterabschnitt (16) des zweiten Paars Gitterabschnitte (16, 18) befestigt ist.

11. Haltegerüst von Kernbrennstäben eines Kernbrennelements, das eine Vielzahl von Haltegittern (14) für Stäbe eines Stabbündels umfasst, wobei die Haltegitter (14) dazu bestimmt sind, entlang der Stäbe (4) voneinander beabstandet verteilt zu sein, **dadurch**
**gekennzeichnet, dass** mindestens eines der Haltegitter (14) ein Haltegitter nach einem der vorangehenden Ansprüche ist.

12. Kernbrennelement, das ein Bündel Kernbrennstäbe (6) und ein Stabhaltegerüst (6) umfasst, **dadurch gekennzeichnet, dass** das Gerüst ein Gerüst nach Anspruch 11 ist.
